Europäisches Patentamt

European Patent Office

Office européen des brevets

(11) Publication number: **0 443 571 A2**

# EUROPEAN PATENT APPLICATION

(21) Application number: 91102519.5

(51) Int. Cl.⁵: **G02F 1/1333, G02F 1/137**

(22) Date of filing: 21.02.91

(30) Priority: 23.02.90 JP 41144/90
01.06.90 JP 141501/90
15.06.90 JP 155109/90

(43) Date of publication of application:
**28.08.91 Bulletin 91/35**

(84) Designated Contracting States:
**DE FR GB**

(71) Applicant: **UBE INDUSTRIES, LTD.**
**12-32, Nishihonmachi 1-chome**
**Ube-shi, Yamaguchi(JP)**

(72) Inventor: **Yoshimoto, Hataaki**
**212-128, Ookido-cho**
**Chiba-shi, Chiba(JP)**
Inventor: **Ito, Katsuhiro**
**20-2, Izumidai 4-chome**
**Ichihara-shi, Chiba(JP)**
Inventor: **Koyama, Toshiya**
**Yamaki-ryo, 44-3, Yamaki**
**Ichihara-shi, Chiba(JP)**

(74) Representative: **Hoeger, Stellrecht & Partner**
**Uhlandstrasse 14 c**
**W-7000 Stuttgart 1(DE)**

(54) **Liquid crystal display panel.**

(57) A liquid crystal display panel for displaying colored images while controlling a transmission of light therethrough, comprises a first transparent base, a first transparent electrode arranged on the first base, a second transparent base, a second transparent electrode arranged on the second base and facing the first electrode and a liquid crystal layer interposed between the picture element electrode and the scanning electrode and formed by a polymer dispersed liquid crystal material comprising (a) a polymeric medium, (b) a liquid crystal material surrounded by surface means or a matrix consisting of the polymeric medium, and (c) a coloring material contained in the polymeric medium and/or the liquid crystal material, the polymeric medium optionally further comprising a visible ray-absorbing black material and the liquid crystal material optionally comprising a pleochroic dye.

*Fig. 1*

## BACKGROUND OF THE INVENTION

### 1. Field of the Invention

The present invention relates to a liquid crystal display panel. More particularly, the present invention relates to a liquid crystal display panel for colored images, in which a polymer dispersed liquid crystal material is used and which is able to control a light transmission therethrough.

### 2. Description of the Related Arts

Recently, a new liquid crystal material, i.e., a polymer dispersed liquid crystal material, has been developed, and this new liquid crystal material is widely utilized for a film-shaped light shutter having a large area or for a large area display material.

The polymer dispersed liquid crystal material is disclosed in PCT International Publication No. 83/01016, U.S. Patent No. 4,435,047 and "Electronic Parts and Materials" No. 12, 1987, pages 67 to 70. In the polymer dispersed type liquid crystal material, a liquid crystal material having a positive dielectric anisotropy is surrounded by a transparent surface means or matrix for affecting the natural structure of the liquid crystal material, to induce a distorted alignment thereof in the absence of an electric field and thus reduce the optical transmission. The liquid crystal material is responsive to the presence of an electric field, to increase the amount of optical transmission.

When the polymer dispersed liquid crystal material is prepared by using a liquid crystal material having a positive dielectric anisotropy and an ordinary refractive index substantially equal to the refractive index of the polymer, and a layer of the polymer dispersed liquid crystal material is interposed between a pair of electrode bases, the resultant liquid crystal display device can scatter the light in the absence of an electric field and can allow the light to transmit therethrough in the presence of an electric field.

The polymer dispersed liquid crystal material includes (1) Nematic Curvilinear Aligned Phase (NCAP) type liquid crystal materials in which liquid crystals are dispersed in the form of fine spheres independently from each other in a matrix consisting of a water-soluble polymeric material, as disclosed in the above-mentioned PCT international publication; (2) liquid crystal materials in which liquid crystals are dispersed and contained in a thermoplastic resin latex matrix, as disclosed in Japanese Unexamined Patent Publication No. 60-252,687; (3) liquid crystal materials in which liquid crystals are dispersed in the form of fine particles in an epoxy resin matrix, as disclosed in PCT Japanese Publication No. 61-502,128; and (4) liquid crystal materials in which liquid crystals are present in the form of at least one continuous network extending in a polymeric matrix, and which is prepared by a solvent cast method, as disclosed in Polymer Preprints, Japan, Vol. 37, No. 8, 2450 (1988), and Japanese Unexamined Patent Publication No. 1-198,725.

Where the conventional polymer dispersed liquid crystal material is used for a liquid crystal display panel for colored images, usually the display panel must be equipped with a color filter. In this conventional colored image display panel, when the color filter is arranged outside of the base plate, and the resultant colored image display surface is observed in an oblique direction, an undesirable shear in colored images occurs in response to the thickness of the base plate, and thus an angle of the visual field becomes narrow.

The above-mentioned disadvantages can be removed by arranging the color filter at a location inside of the base plate and right above or below an ITO electrode adjacent to the liquid crystal material layer, but this arrangement of the color filter is disadvantageous in that a large drive voltage is required to operate the display devise or the formation of the ITO electrode over the color filter is difficult

Japanese Unexamined Patent Publication Nos. 62-28,711 and 62-28,712 disclose a liquid crystal display devise for colored images, having a liquid crystal material layer in which a number of microcapsules consisting of a liquid crystal material encapsulated with a colored polymeric material in the form of fine particles, is dispersed in a transparent polymeric binder, or in which a number of microcapsules comprising a liquid crystal material encapsulated with a colored polymeric material in the form of fine particles in a transparent polymeric material is dispersed in a colored polymeric binder.

In the above-mentioned display devices, the light transmitted through the devices is colored in the absence of an electric field, but is not substantially colored in the presence of an electric field.

Namely, in the above-mentioned display devices, it is difficult to completely or substantially shut out the light, and therefore, the conventional color display device having red, blue and green colored liquid crystal material layers exhibits an unsatisfactory contrast and the displayed colored images exhibit an unsatisfactory color vividness.

Japanese Unexamined Patent Publication No. 64-91,125 discloses liquid crystal display devices having a liquid crystal material layer in which a liquid crystal material is dispersed in the form of fine particles in a visible ray-absorbing medium. In these display devices, the display surface becomes dark in the absence of an electric field because the light is absorbed by the liquid crystal material layer, and appears bright in the presence of an electric field because the light is transmitted through the liquid crystal material layer.

When these liquid crystal display devices are equipped with a color filter, it is possible to display colored images with a good contrast, but these display devices have the same disadvantages as described above.

## SUMMARY OF THE INVENTION

An object of the present invention is to provide a liquid crystal display panel for displaying colored images with a good contrast, while controlling a visible ray-transmission therethrough.

The above-mentioned object can be attained by the liquid crystal display panel of the present invention, which comprises:

a first transparent base;

a first transparent electrode arranged on the first base;

a second-transparent base arranged in parallel to and spaced from the first base,

a second transparent electrode arranged on the second base and facing and spaced from the first electrode; and

a liquid crystal material layer interposed between the first electrode and the second electrode and comprising a polymer dispersed liquid crystal material which comprises (a) a polymeric medium comprising a transparent polymeric material, (b) a liquid crystal material surrounded by surface means or a matrix consisting of the polymeric medium, and (c) a coloring material contained in at least one member selected from the group consisting of the polymeric medium and the liquid crystal material.

In a preferable embodiment of the liquid crystal display panel of the present invention, the polymeric medium further comprises a visible ray-absorbing material evenly mixed in the polymeric material, and the liquid crystal material contains the coloring material.

In another preferable embodiment of the liquid crystal display panel of the present invention, the liquid crystal material further contains a pleochroic dye.

## BRIEF DESCRIPTION OF THE DRAWINGS

Figure 1 is an explanatory cross-sectional profile of a portion of an embodiment of the liquid crystal display panel of the present invention;

Fig. 2 is an explanatory cross-sectional profile of a portion of an embodiment of the liquid crystal display panel of the present invention for displaying full colored images; and

Fig. 3 is an explanatory cross-sectional profile of a portion of another embodiment of the liquid crystal display panel of the present invention for displaying full colored images.

## DESCRIPTION OF TEE PREFERRED EMBODIMENTS

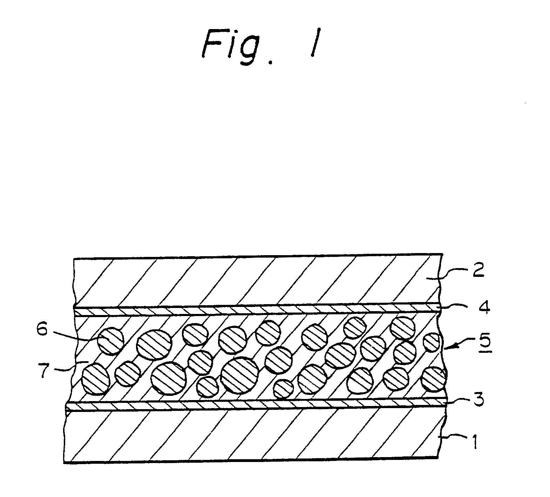

Figure 1 shows an explanatory cross-sectional profile of a portion of an embodiment of the liquid crystal display panel of the present invention having a liquid crystal material layer composed of a polymer dispersed liquid crystal material.

In Fig. 1, a first transparent base plate 1 and a second transparent base plate 2 are arranged in parallel to and spaced from each other, a first transparent electrode 3 is arranged on the first base plate 1, and a second transparent electrode 4 is arranged on the second base plate 2 and faces and is spaced from the first electrode 3.

A polymer dispersed liquid crystal material layer 5 is interposed between the first electrode 3 and the second electrode 4. In this liquid crystal material layer 5, a liquid crystal material is dispersed in the form of fine particles 6 in a polymeric medium 7 comprising a transparent polymeric material.

In the present invention, a coloring material is contained in at least one member selected from the liquid crystal material 6 and the polymeric medium 7.

The polymer dispersed liquid crystal material usable for the present invention is preferably selected from (1) the above-mentioned NCAP type liquid crystal materials, (2) the thermoplastic resin latex-containing liquid crystal materials, (3) the epoxy resin-containing liquid crystal materials and (4) the continuous network type liquid crystal materials.

The polymeric medium in the polymer dispersed liquid crystal material layer comprises a transparent polymeric material comprising at least one member selected from for example, polyvinyl alcohol, polymethylmethacrylate, ultraviolet ray-cured acrylic polymers, polyvinylchloride, and polyvinylidene chloride.

The liquid crystals usable for the present invention are not restricted to a specific type of liquid crystals and preferably selected from nematic liquid crystals, cholesteric liquid crystals and smectic liquid crystals. Preferably, the liquid crystal material is present in an amount of 1 to 10 times, more preferably 2 to 5 times the weight of the polymeric medium.

In the polymer dispersed liquid crystal material layer, the polymeric medium and/or the liquid crystal material contains a coloring material. The coloring material is not limited to a specific type or color of dyes or pigments, unless it is a pleochroic dye. For example, the coloring material comprises at least one member selected from solvent-soluble red dyes, for example, Solvent Red 1 and Solvent Red 3; solvent-soluble green dyes, for example, Solvent Green 3; solvent-soluble blue dyes, for example, Solvent Blue 3, and Solvent Blue 11; red pigments, for example, CROMOPHTAL RED A2B (trademark, made by Ciba Geigy CO.); green pigments, for example, Heriogen Green G (trademark, made by BASF); and blue pigments, for example, Heriogen Blue B (trademark, made by BASF).

The coloring material is present preferably in an amount of 0.1 to 10%, more preferably 1 to 8%, based on the weight of the liquid crystal material.

In a preferable embodiment of the liquid crystal display panel of the present invention, the polymeric medium in the polymer dispersed liquid crystal material layer further comprises a visible ray-absorbing material, in addition to the transparent polymeric material, and the liquid crystal material contains the coloring material.

The visible ray-absorbing material comprises at least one member selected from black dyes and pigments. The black dyes and pigments are not limited to a specific type of dyes and pigments. For example, the visible ray-absorbing material comprises at least one member selected from solvent-soluble black dyes, for example, Solvent Black 3; disperse black dyes, for example, Disperse Black 28; black pigments, for example, carbon black and titanium black. The black dyes or pigments may be mixtures of red, blue and yellow dyes or pigments.

Preferably, the visible ray-absorbing material is present in an amount of 1 to 20%, more preferably 2 to 10%, based on the weight of the polymeric material.

In the above-mentioned embodiment, when a voltage is applied to the polymer dispersed liquid crystal material layer to create an electric field, a colored light is transmitted through the liquid crystal material layer, and in the absence of the electric field the display surface becomes dark.

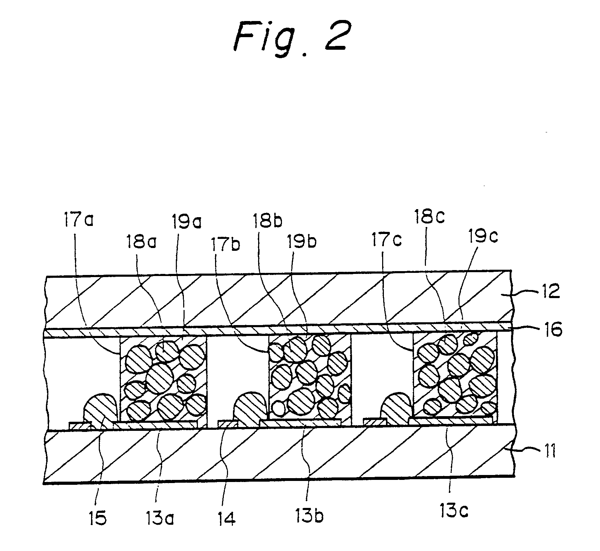

The liquid crystal display panel as indicated in Fig. 2 comprises a first transparent base plate 11, a second transparent base plate 12 facing and spaced from the first base plate 11, a plurality of transparent picture element electrodes 13a, 13b and 13c arranged on the first base plate 11, a plurality of signal lines 14 for supplying electric signals to the picture element electrodes, arranged adjacent to and spaced from the picture element electrodes on the first base plate 11, a plurality of varistor layers 15 comprising fine varistor particles and a binder and electrically connecting the picture element electrodes 13 to the signal lines 14, a transparent scanning electrode 16 arranged on the second base plate 12 and facing and spaced from the picture element electrodes 13, and a plurality of polymer dispersed liquid crystal material layers 17a, 17b and 17c, interposed between the picture element electrodes 13 and the scanning electrode 16.

The liquid crystal material layer 17a comprises a liquid crystal material containing a red coloring material and dispersed in the form of a number of fine particles 18a in a polymeric medium 19a comprising a transparent polymeric material and a visible ray-absorbing material mixed into the polymeric material.

The liquid crystal material layer 17b is the same as the above-mentioned layer 17a, except that the liquid crystal material particles 18b contain a green coloring material.

The liquid crystal layer 17c is the same as the above-mentioned layer 17a, except that the liquid crystal material particles 18c contain a blue coloring material.

Therefore, the picture element electrodes 13a, 13b and 13c are respectively employed for displaying red, green or blue colored images.

The picture element electrodes and the signal lines can be formed by a conventional patterning method. Also, the varistor layers can be formed by a conventional screen printing method.

When a voltage is applied to the liquid crystal material layer 17a, 17b or 17c, to create an electric field, a red, green or blue colored light is transmitted through the corresponding liquid crystal material layer to form a colored image.

When the voltage is released, most of the incident light is absorbed by the liquid crystal material layer 17a, 17b or 17c, and thus no colored image is formed.

In another preferable embodiment of the liquid crystal display panel of the present invention, the liquid crystal material contains a pleochroic dye. Also, at least one member of the liquid crystal material and the polymeric medium contains a non-pleochroic coloring material.

The pleochroic dye can be selected from conventional pleochroic dyes usable for conventional liquid crystal display devises, for example, PLEOCHROIC DYE S301 (black), S344 (black), S424 (black), S430 (black), M370 (red) and M141 (blue) (made by Mitsui Toatsu Senryo K.K.). Preferably, the pleochroic dye is present in an amount of 0.1 to 10% based on the weight of the liquid crystal material.

In this type of liquid crystal display panel in which the liquid crystal material contains non-plechroic red dye and pleochroic black dye, when no voltage is applied to the liquid crystal material layer, most of the incident light is absorbed by the pleochroic black dye in the liquid crystal material, and thus the display surface of the panel looks dark red. When a voltage is applied to the liquid crystal material layer to create an electric field, most of the incident light is colored red by the non-pleochroic red dye and transmitted through the liquid crystal material layer, and thus the display surface of the panel looks bright red.

When the liquid crystal material contains a green pleochroic dye, a blue pleochroic dye and a red non-pleochroic dye, the display surface of the panel looks dark or black in the absence of an electric field, and looks red in the presence of an electric field.

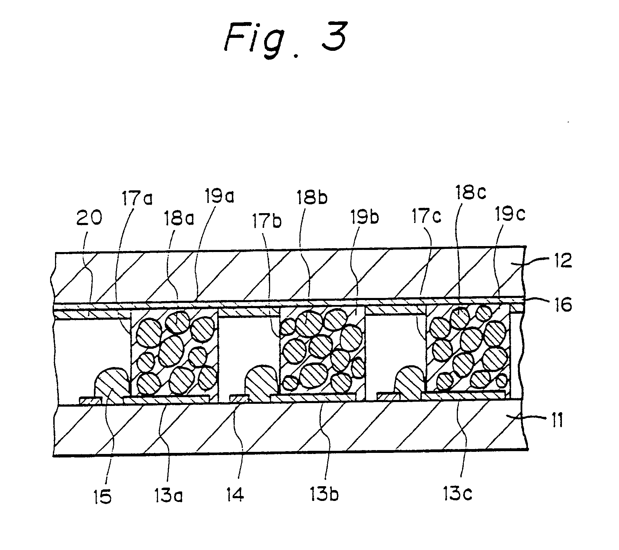

In the liquid crystal display panel as indicated in Fig. 3, the liquid crystal material particles 18a, 18b and 18c contain a pleochroic black dye, and at least one of the polymeric mediums 19a, 19b and 19c and the liquid crystal materials 18a, 18b and 18c contains a non-pleochroic coloring material. Also, in this panel of Fig. 3, black masks 20 are arranged on the second base plate 12 and between the liquid crystal material layers, 17a, 17b, 17c .... The black masks 20 are effective for enhancing the contrast, because it can inhibit a leakage of light when transmitted through the gaps between the liquid crystal material layers 17a, 17b and 17c.

When a voltage is applied to each liquid crystal material layer 17a, 17b or 17c, a colored light transmits through the liquid crystal material layer. Therefore, the liquid crystal display panel can display colored images without using color filters.

EXAMPLES

The present invention will be further illustrated in detail by the following specific examples, which is no way limit the scope of the invention.

Example 1

Carbon black in an amount of 20 mg was evenly dispersed in 1 ml of water, and the resultant aqueous dispersion was mixed to 4 g of a 10% aqueous solution of polyvinyl alcohol. After gradually stirring, to the mixture was added 1.5 g of material LIQUID CRYSTAL E-44 (available from BDH Co.) in which 30 mg of Solvent Red 3 were dissolved. The resultant admixture was stirred at high speed to provide a red-colored emulsion R and then filtered through a filter G4 to remove coarse particles of the carbon black.

A green-colored emulsion G was prepared by the same procedures as mentioned above, except that Solvent Green 3 was employed in place of the red dye.

A blue-colored emulsion 13 was prepared by the same procedures as mentioned above, except that Solvent Blue 11 was employed in place of the red dye.

In the production of the liquid crystal display panel as indicated in Fig. 2, the emulsions R, G and B are coated, respectively and separately from each other, on the predetermined portions of the scanning electrode 16 on the second base plate 12 by a screen printing method, and dried, to provide red, green and blue-colored liquid crystal material layers 17a, 17b, and 17c, each having a thickness of 14 $\mu$m.

Then, a first base plate 11 having transparent picture element electrode 13a, 13b, and 13c, signal lines 14 and varistor layers 15 was superposed on and bonded to the second base plate 12 having the scanning electrode 16 and the liquid crystal material layers 17a, 17b and 17c, in such a manner that the liquid crystal material layers 17a, 17b and 17c were interposed respectively between the picture element electrodes 13a, 13b, and 13c and the scanning electrode 16.

When a voltage was applied to the liquid crystal material layers 17a, 17b and 17c, red, green and blue-colored images were appeared on the display surface of the panel.

Example 2

Carbon black in an amount of 0.15 g was dispersed in 20 g of a 15% aqueous solution of polyvinyl alcohol by thoroughly stirring the solution and the resultant dispersion was filtered through a filter G5 to remove large particles of the carbon black.

The filtered dispersion was mixed with 12 g of dodecyl benzene, 3 g of n-butyl alcohol and 2 g of n-pentyl alcohol, and the mixture was stirred by a stirrer at a rotation speed of 600 r.p.m. for 10 minutes, to provide a black-colored, visible ray-absorbing emulsion.

Separately, a red-colored liquid crystal material R was prepared by mixing 5 g of the same liquid crystal material as mentioned in Example 1 with 100 mg of Solvent Red 3.

A green-colored liquid crystal material G was prepared by the same operation as mentioned above, except that Solvent Green 3 was employed in place of the red dye.

A blue-colored liquid crystal material B was prepared by the same operation as mentioned above, except that Solvent Blue 11 was used in place of the red dye.

The above-mentioned black-colored emulsion was coated on predetermined portions of the scanning electrode 16 of the second base plate 12 by a screen printing method and dried, to form dried black-colored polymeric layers having a thickness of 14 $\mu$m. The resultant layers on the second base plate were thoroughly washed with hexane at room temperature and dried, to form visible ray-absorbing polymeric medium layers having network-shaped pores formed therein.

The visible ray absorbing polymeric medium layers were coated respectively with the red, green and blue-colored liquid crystal materials R, G and B in an amount of 1.2 mg/cm$^2$ and the coated layers were placed under a reduced pressure to allow the liquid crystal materials R, G and B to penetrate into the network-shaped pores in the polymeric medium layers, to form red, green and blue-colored polymer dispersed liquid crystal material layers.

The second base plate having the scanning electrode and the liquid crystal material layers was superimposed on the first base plate having the picture element electrodes, signal lines and varistor layers in the same manner as mentioned in Example 1.

The resultant liquid crystal panel could display clear red, green and blue-colored images upon application of a voltage, without using color filters.

Example 3

A 12% polyvinyl alcohol aqueous solution in an amount of 2.5 g was mixed with a red-colored liquid crystal material prepared by dissolving 20 mg of PLEOCHROIC BLACK DYE S301 (available) from Mitsui Toatsu Senryo K.K.) and 20 mg of Solvent Red 3 in 1.0 g of a LIQUID CRYSTAL E-44 (available from BDH Co.) The mixture was stirred at a high speed to provide an emulsion.

The emulsion was coated on a surface of a transparent electrode on a first ITO glass base plate by a doctor-blade coating method and the resultant emulsion layer was dried to form a liquid crystal material layer.

A second ITO glass base plate having a transparent electrode arranged thereon was placed on the liquid crystal material layer of the first ITO glass base plate so that the liquid crystal material was interposed between the transparent electrodes on the first and second base plates, to provide a liquid crystal display panel.

When a voltage was not applied to the panel, the display surface of the panel looked dark red. When a voltage of 70 volt was applied, the display surface of the panel looked bright red. The contrast ratio was 46 at a wave length of 610 nm.

Example 4

A liquid crystal display device as shown in Fig. 3 was prepared as follows.

A 10% polyvinyl alcohol aqueous solution in an amount of 4 g was mixed with a red-colored liquid crystal material prepared by dissolving 30 mg of PLEOCHROIC BLACK DYE S 301 (made by Mitsui Toatsu Senryo K.K.) and 20 mg of Solvent Red 3 in 1.5 g of LIQUID CRYSTAL E-44 (made by BDH Co.). The mixture was stirred at high speed to provide an emulsion R.

Also, a green-colored emulsion G was prepared in the same manner as mentioned above, except that Solvent Green 3 was employed in place of the red dye.

Further, a blue-colored emulsion B was prepared in the same manner as mentioned above, except that Solvent Blue 11 was employed in place of the red dye.

As indicated in Fig. 3, a transparent scanning electrode 16 was arranged on a second transparent base plate 12 and a plurality of black mask layers 20 were formed on predetermined portions of the scanning electrode 16 by coating a coating paste (ink) containing a black pigment and drying. Then, the emulsions R, G and B were respectively applied to predetermined portions between the black mask layers 20 on the scanning electrode 16 by a screen printing method, and dried, to form red, green and blue-colored polymer dispersed liquid crystal material layers 17a, 17b and 17c each having a thickness of 14 $\mu$m.

The liquid crystal display panel was provided by superposing the second base plate 12 having the scanning electrode 16, the black mask layers 20 and the liquid crystal material layers 17a, 17b and 17c on a first base plate 11 having picture element electrodes 13a, 13b, and 13c, signal lines 14 and varistor layers 15 in the same manner as described in Example 1.

The resultant liquid crystal display panel displayed clear red, green and blue-colored images with good contrast in the presence of an electric field. In the absence of an electric field, the display surface of the panel was dark.

Example 5

The same procedures as in Example 4 were carried out with the following exceptions.

A red-colored emulsion R was prepared by evenly dispersing 80 mg of a red pigment (available under the trademark of CROMOPHTAL RED A2B, from Ciba Geigy Co. in 4 g of a 10% polyvinyl alcohol aqueous solution, mixing the resultant dispersion with 1.5 g of LIQUID CRYSTAL E-44 (made by BDH Co.) containing 30 mg of PLEOCHROIC BLACK DYE S201 (made by Mitsui Toatsu Senryo K.K.) and stirring the mixture at high speed.

A green-colored emulsion G was prepared by the same procedures as mentioned above, except that the red pigment was replaced by 60 mg of a green pigment available under the trademark of HELIOGEN GREEN G from BASF.

A blue-colored emulsion B was prepared by the same procedures as mentioned above, except that the red pigment was replaced by 50 mg of a blue pigment available under the trademark of HELIOGEN BLUE B, from BASF.

The resultant liquid crystal display panel displayed clear red, green and blue-colored images with a satisfactory contrast in the presence of an electric field.

## Claims

1. A liquid crystal display panel for colored images, comprising:
   a first transparent base;
   a first transparent electrode arranged on the first base;
   a second transparent base arranged in parallel to and spaced from the first base;
   a second transparent electrode arranged on the second base and facing and spaced from the first electrode; and
   a liquid crystal material layer interposed between the first electrode and the second electrode and comprising a polymer dispersed liquid crystal material which comprises (a) a polymeric medium comprising a transparent polymeric material, (b) a liquid crystal material surrounded by surface means or a matrix consisting of the polymeric medium, and (c) a coloring material contained in at least one member selected from the group consisting of the polymeric medium and the liquid crystal material.

2. The liquid crystal display panel as claimed in claim 1, wherein the polymeric medium further comprises a visible ray-absorbing material evenly mixed in the polymeric material, and the liquid crystal material contains the coloring material.

3. The liquid crystal display panel as claimed in claim 1, wherein the liquid crystal material contains a pleochroic dye.

4. The liquid crystal display panel as claimed in claim 1, wherein the coloring material consists of a member selected from the group consisting of red, green, and blue dyes and pigments.

5. The liquid crystal display panel as claimed in claim 1 or 2, wherein the coloring material is present in an amount of 0.1 to 10% based on the weight of the liquid crystal material.

6. The liquid crystal display panel as claimed in claim 2, wherein the visible ray-absorbing material comprises at least one member selected from the group consisting of black dyes and pigments.

7. The liquid crystal display panel as claimed in claim 2, wherein the visible ray-absorbing material is present in an amount of 1 to 20% based on the weight of the polymeric material.

8. The liquid crystal display panel as claimed in claim 3, wherein the pleolchroic dye is present in an amount of 0.1 to 10% based on the weight of the liquid crystal material.

9. The liquid crystal display panel as claimed in claim 1, wherein the liquid crystal material is present in an amount of 1 to 10 times the weight of the polymeric medium.

# Fig. 1

# Fig. 2

# Fig. 3